# EUROPEAN PATENT SPECIFICATION

(11) **EP 1 607 601 B1**
(45) Date of publication and mention of the grant of the patent: **21.04.2010**
(21) Application number: 05012807.3
(22) Date of filing: 14.06.2005
(51) Int. Cl.: F02B 31/08, F02M 35/108

(54) **Engine with primary and secondary intake passages**
Brennkraftmaschine mit primären und sekundären Einlasskanälen
Moteur à combustion interne avec conduits d'admission primaires et secondaires

(30) Priority: 14.06.2004 JP 2004175226
(43) Date of publication of application: 21.12.2005
(73) Proprietor: Yamaha Hatsudoki Kabushiki Kaisha, Iwata-shi, Shizuoka-ken (JP)
(72) Inventor: Suzuki, Yuichi, Iwata-shi Shizuoka-ken (JP); Sakurai, Kenichi, Iwata-shi Shizuoka-ken (JP)
(74) Representative: Grünecker, Kinkeldey, Stockmair & Schwanhäusser Anwaltssozietät

(56) References cited:
- US-A- 4 313 410
- US-A- 4 344 396
- US-A- 4 530 325
- US-A- 5 165 374
- US-A- 5 765 525
- PATENT ABSTRACTS OF JAPAN vol. 007, no. 250 (M-254), 8 November 1983 (1983-11-08) & JP 58 135322 A (SUZUKI JIDOSHA KOGYO KK), 11 August 1983 (1983-08-11)

## Description

This invention relates to an engine according to the preamble portion of claim 1 and, in particular, to an engine having an intake system using an intake control valve to vary an intake air flow in branched passages for each intake valve.

Modern engines for motor vehicles are improved in their fuel consumption by so-called lean burn. To achieve such lean bum, an intake system capable of creating a swirl or a tumble in a cylinder during an intake stroke is often used to securely atomize a small amount of fuel and mix it with an intake air.

There is an intake system of this type disclosed in US-A-5 165 374 and in JP 07-324628A (1995), for example. The intake system, disclosed in JP 07-324628A (1995), is provided for an engine having cylinders each including three intake valves and employs a configuration in which the flow direction of the intake air can be changed by a flow control valve in the shape of a cylinder.

This intake control valve formed with a cylindrical section of a smaller diameter, another cylindrical section of a larger diameter, and a groove for full open throttle is mounted to the engine for rotation about an axis orthogonal to the flow direction of the intake air, to control, in cooperation with a wall of an intake passage, a range for admission of intake air to pass. When the intake control valve is brought in its fully opening position, the groove and the surface of the intake passage are made continuous each other to maximize the range for admission of intake air to pass. On the other hand, when the intake control valve is brought in its fully closing position, the groove and the surface of the intake passage are made discontinuous each other and the passage is blocked by the cylindrical section, to form an air flow space S for the fully closing position between the outer circumference of the cylindrical section of a small diameter located on one side of the intake passage and the surface of the passage.

That is, in this intake system, the intake air passes through the air flow space S for the fully closing position of the intake control valve, causing the intake air flowing through the intake passage to be deviated to one side of the intake passage. As a result, more intake air can flow into one of the three branched passages, that is located corresponding to the one side described above to generate swirls within the cylinder, which promotes to atomize the fuel and stirs fuel particles and air sufficiently. Accordingly, even though there is supplied a relatively small amount of fuel, the combustion thereof is stable, resulting in realization of lean burn.

As a conventional intake system, there is also an intake system having a helical port for generating swirls, as disclosed in JP 05-26135A (1993), for example.

In the intake systems each configured as described, however, it is possible to not to realize lean burn when the engine is operated in lower engine speed. Because, after the intake air left the intake control valve it is difficult to keep the flow direction of the intake air stable, due to relatively low flow velocity of the intake air flowing in the intake passage. In other words, since the intake air is drawn towards the branched passages for each intake valve by negative pressure within the cylinder, the intake air from the one side in the intake passage will dissipate and flow towards the respective branched passages if the flow velocity of the intake air after it passed the intake control valve. As a result, for the conventional intake system, the force of the swirls generating in the cylinder is weakened when the engine is operated in its low engine speed range, while the reduction of the fuel to be supplied makes the combustion unstable.

Also, in an intake system having projections, such as the helical port shown in JP 05-26135A (1993), formed on the wall surface, it is difficult to obtain high output due to a large inhalation resistance.

The present invention is made to eliminate such problems as described above. An object of the present invention is to provide an engine as indicated above having an intake system capable of securely generating swirls and tumbles to realize lean bum and reducing the inhalation resistance to obtain high output.

This objective is solved in an inventive manner by an engine according to claim 1.

According to a preferred embodiment, the intake control valve is constituted as a butterfly valve adapted to control the opening of the intake passage.

According to another embodiment, there is provided a curved portion having a profile following to a movement excursion of a valve body of the intake control valve which is formed downstream of the intake control valve in a bottom wall of the intake control valve mounting section and in a vicinity of the valve body which is movable toward the downstream of the intake passage when the intake control valve is operated to open.

Further, preferably the secondary intake passages provided for each of the intake valves are extending to a vicinity of a valve seat of the intake valves, respectively. Therein, the downstream ends of the secondary intake passages preferably have an opening, at the downstream end portion of the branched passages so that each opening faces, along a ceiling wall of a related combustion chamber, the opposing side of the related combustion chamber, wherein an injector for directly spraying fuel into the combustion chamber may be disposed between both openings, as seen in the axial direction of the cylinder. Further, an intake passage may include the primary intake passage provided with the intake control valve and first and the second branched passages, and may include first and a second secondary intake passages for the respective intake valves, which extend from the section in the primary intake passage where the intake control valve is mounted, to a vicinity of valve seats of the intake valves, respectively.

Still further, preferably the secondary intake passages provided for each of the intake valves are extending to a vicinity of a partition section dividing the downstream end portion of the intake port into the branched passages. Therein, the downstream ends of the secondary intake passages preferably have an opening, in the vicinity of the upstream side of a branch section of the branched passages, wherein an injector for spraying fuel into the primary intake passage may be disposed between both openings, as seen in the axial direction of the cylinder, and across the primary intake passage from both openings. Further, an intake passage may include the primary intake passage provided with the intake control valve and first and the second branched passages, and may include first and a second secondary intake passages for the respective intake valves, which extend from the section in the primary intake passage where the intake control valve is mounted, to a vicinity of a partition wall for partitioning to divide a downstream end portion of an intake port into two branched passages.

In the following, the present invention is explained in greater detail with respect to several embodiments thereof in conjunction with the accompanying drawings, wherein:
- FIG. 1: is a sectional view, showing a cylinder head section of an engine provided with an intake system according to a first embodiment;
- FIG. 2: shows a configuration of the intake system according to the first embodiment;
- FIG. 3: is a cross sectional view, showing a second embodiment; and
- FIG. 4: shows a configuration of the intake system of the second embodiment.

### (First Embodiment)

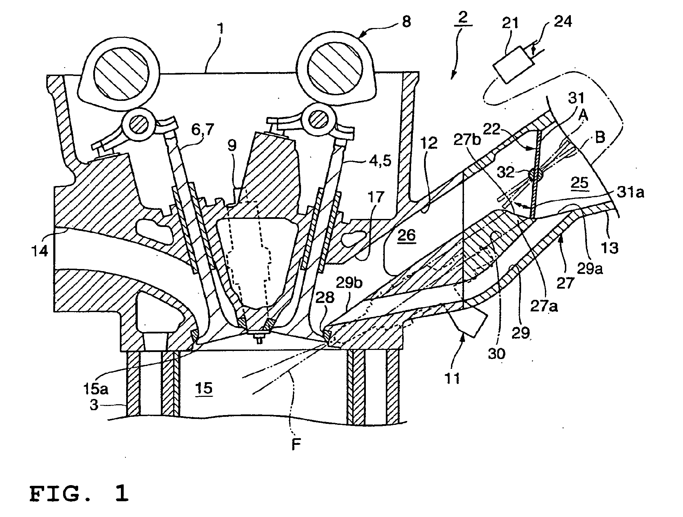

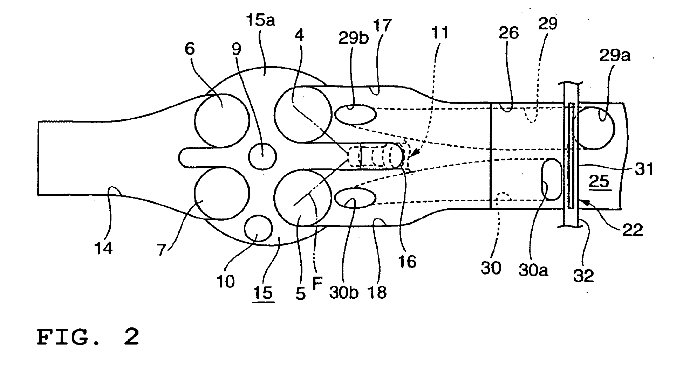

Now, an intake system according to a first embodiment is described in detail, with reference to FIG.1 and FIG. 2.

FIG. 1 a sectional view, showing a cylinder head section of an engine provided with the intake system according to the first embodiment, and FIG. 2 shows a configuration of the intake system according to the first embodiment.

In the drawings, reference numeral 1 denotes a cylinder head provided with an intake system 2 according to the first embodiment and reference numeral 3 denotes a cylinder body. The cylinder head 1 is a type of DOHC, provided with two intake valves 4 and 5, two exhaust valves 6 and 7, a valve actuating device 8 for actuating those intake and exhaust valves, two ignition plugs 9 and 10 (Refer to FIG. 2), and an injector 11. To one side portion of the cylinder head 1 where an inlet of an intake port 12 is opened is mounted an intake manifold 13, while, to the other side portion of the cylinder head 1 where an outlet of an exhaust port 14 is opened is mounted an exhaust manifold (not shown).

The intake port 12, as can be seen in a side view of FIG. 1, is formed linearly from its inlet to its outlet, with its end portion on a combustion chamber 15 side being branched for each intake valve through a partition wall 16, as shown in FIG. 2. Of the two branched passages, located in the intake port 12, for respective two valves, one to which the first intake valve 4 comes is referred to as a first branched passage 17, and the other to which the second intake valve 5 comes is referred to as a second branched passage 18.

The ignition plug 9 is disposed approximate center of a ceiling wall 15a of the combustion chamber 15 in the cylinder head 1 and the ignition plug 10 is disposed in an outer peripheral area of the ceiling wall 15a and between the second intake valve 5 and exhaust valve 7.

The injector 11 is to spray fuel directly into the combustion chamber 15 and is disposed so as to extend along the intake port 12 and between the intake port formed in the cylinder head 1 and the cylinder body 3. The injector 11 is positioned so that its axis is approximately parallel to the centerline of the intake port 12, as seen in the side view shown in FIG. 1, and overlaps with the centerline of the upstream portion of the intake port 12, as seen in a plan view shown in FIG. 2. Further, this injector 11 injects the fuel in an area indicated by a two-dot-chain line F in FIG. 1 and FIG. 2, in other words, in an area having a deltaic shape which diverges along a direction intersecting the axis of the cylinder (equal to the light-to-left direction in FIG. 1) toward the central portion within the cylinder.

The intake manifold 13 has an upstream end to which a surge tank 21 is connected and a downstream end provided with an intake control valve 22 that is a butterfly valve. The surge tank 21 has an air inlet provided with a throttle valve 24. An intake air is metered by the throttle valve 24 and taken in. The intake air is supplied to the inside of the cylinder through the surge tank 21 and an intake passage 25 that is formed within the intake manifold 13 and the cylinder head 1.

The intake passage 25, as shown in FIG. 1, includes: a primary intake passage 26 provided with the intake control valve 22 and having the first and the second branched passage 17 and 18; and a first and a second secondary intake passage 29 and 30 for respective intake valves, which extend from the section in the primary intake passage 26 where the intake control valve 22 is mounted (hereinafter, this section is referred to as an intake control valve mounting section 27), to the vicinity of valve seats 28 of the intake valves 4 and 5, respectively.

A bottom wall 27a of the intake control valve mounting section 27 (which is a bottom wall of the primary intake passage 26 within the intake manifold 13 and is also a passage wall located on the crankshaft side in the axial direction of the cylinder) is formed to incline upward relatively along the direction toward the downstream. This bottom wall 27a is formed with a curved portion 27b having a profile following to the movement excursion of a valve body 31 of the intake control valve 22 which will be described as follows.

The intake control valve 22 is used to increase and decrease an opening area of the intake passage 25 and is attached to the intake control valve mounting section 27 for rotation about an axis extending in a direction along two intake valves 4 and 5 in a line. This intake control valve 22 is formed as a butterfly valve, which valve body 31 has a main face formed in the shape of a landscape ellipse so that the valve body 31, while being kept in its fully closing position shown by an actual line in FIG. 1, can close the primary intake passage 26. The valve body 31 rotates clockwise from the fully closing position shown in FIG. 1 to open. In other words, when the valve body 31 opens from its fully closing position, the lower half 31 a of the valve body 31 displaces downstream of the intake passage 25. The curved portion 27b formed in the bottom wall 27a of the intake control valve mounting section 27 is formed to have a shape of an arc in its cross section following to the movement excursion of the end edge of the lower half 31 a when the lower half moves toward the direction to open.

A valve shaft 32 of the intake control valve 22 passes through and protrudes out of the intake manifold 13. The protruding portion of the valve shaft is connected to a drive device (not shown) which employs a configuration for increasing and decreasing the opening of the intake control valve 22 according to an engine speed and an engine load (for example, a throttle opening and an intake vacuum).

The first and the second secondary passage 29 and 30 are formed to locate, as shown in FIG. 1, below the primary intake passage 26 (on the crankshaft side with respect to the axial direction of the cylinder) and, so as to overlap the primary intake passage 26, as can be seen from the plan view in FIG. 2. In this embodiment, the first and the second secondary passage 29 and 30 have the same cross-sectional area each other. Further, the respective cross-sectional areas of the first and the second secondary passage 29 and 30 are gradually reduced, toward their tip ends, smaller than those of the first and the second branched passages 17 and 18, respectively, to thereby accelerate flow rate for an increase of directivity.

Of the first and the second secondary intake passages 29 and 30, the first secondary intake passage 29 shown as being broken in FIG. 1 has an opening at an upstream end thereof, that is opened at a position upstream of the valve body 31 of the intake control valve 22 when it is in its fully closing position in the bottom wall 27a of the intake control valve mounting section 27. In the figures, this opening is represented by reference numeral 29a. Also, the downstream end of the first secondary intake passage 29 has an opening that is opened in the vicinity of the valve seat 28 of the intake valve 4 in the first branched passage 17. On the other hand, the second secondary intake passage 30 has an opening that is located in the curved portion 27b of the bottom wall 27a and directed forward. Also, the downstream end has an opening that is opened in the vicinity of the valve seat 28 of the second intake valve 5 in the second branched passage 18. The opening located at the upstream end of the second secondary intake passage 30 is represented by reference numeral 30a, as shown in FIG. 2.

The respective downstream ends of the first and the second secondary intake passages 29 and 30 have an opening which is opened at the downstream end portion of the first and second branched passages 17 and 18 and slightly outwardly along the inner surface of the cylinder as seen in a plan view, so that each opening faces, along a ceiling wall 15a of the combustion chamber 15, the opposing side of the combustion chamber 15. The opening in the downstream end portion of the first secondary intake passage 29 is denoted by reference numeral 29b in the figure, and the opening in the downstream end portion of the second secondary intake passage 30 is denoted by reference numeral 30b in FIG. 2. Those openings 29b and 30b formed in the downstream end portion are located, as shown in FIG.2, at approximately the central portion of the branched passages 17 and 18, respectively, with respect to the direction of the intake valves 4 and 5 arranged in line, that is, at the lowest portion (the portion closer to the combustion chamber 15). In this embodiment, as shown in the plan view of FIG. 2, injection holes of the injector 11 is located, between the openings 29b and 30b of the downstream end, so as to face the inside of the combustion chamber 15.

In the intake system 2 configured as described above, when the engine speed is in a low engine speed and load range including the idling state, the valve body 31 of the intake control valve 22 is brought in its fully closing position by the drive device, as shown by an actual line in FIG. 1. In this way, when the intake control valve 22 is fully closed, the intake air is supplied into the cylinder through only the first secondary intake passage 29 having its opening that is opened into the intake passage 25 on the upstream side of the intake control valve 22.

The first secondary intake passage 29 extends, starting at the opening 29a at the upstream end portion, to the vicinity of the valve seat 28 of the first intake valve 4. Therefore, all of the intake air flowing through the first secondary intake passage 29 is led to the vicinity of the valve seat 28 and then drawn into the combustion chamber 15 through a gap produced between the intake valve 4 and the ceiling wall 15a when the first intake valve 4 is opened.

Thus, positioning the intake control valve 22 in its fully closing position allows the cylinder to be supplied with approximately the whole amount of the intake air through only the first branched passage 17. In this way, the intake air passing through only the first branched passage 17 and flowing into the cylinder will make a swirl within the cylinder. The swirl is occurred so as to whirl counterclockwise, as seen in the plan view of FIG. 2.

While, the fuel is directly sprayed from the injector 11, in the middle of an intake stroke, into the cylinder in which the swirl is being generated.

It is therefore possible to facilitate to atomize and mix the fuel with air by the swirl generated in the cylinder. Even though there is supplied less amount of fuel, the combustion in the low engine speed and low load is stabilized. As a result, by using this intake system 2, lean burn can be realized when the engine is under the low engine speed and load.

In this embodiment, the intake air can be supplied directly to the gap created between the first intake valve 4 and the ceiling wall 15a of the combustion chamber 15.

Additionally, since the intake air flows through the first secondary intake passage 29 having a relatively small cross-sectional area, the flow velocity of the intake air becomes relatively high. The flow velocity of the intake air flowing into the cylinder also becomes high to generate swirls more securely in a state that kinetic energy of the intake air becomes large. As a result, it becomes possible to further facilitate to atomize and mix the fuel, directly supplied into the cylinder, with the intake air.

In this embodiment, since the ignition plug 9 is disposed in the center of the combustion chamber 15 and another ignition plug 10 disposed in the side portion of the combustion chamber 15, the fuel can be securely ignited, notwithstanding the fuel flows, taking with the swirl of a high velocity.

When the engine is operated in its middle speed and load, the valve body 31 of the intake control valve 22 is driven to open to a position indicated by a two-dot-chain line A in FIG. 1. In this state, the valve body 31 of the intake control valve 22 is opened beyond the upstream end opening 30a of the second secondary intake passage 30, which in turn allows the intake air to flow therethrough. Since the second secondary intake passage 30 extends from the upstream end opening 30a to the vicinity of the valve seat 28 of the second intake valve 5, the intake air flowing through the second secondary intake passage 30 is scantly mixed with the intake air flowing through the first secondary intake passage 29 and then supplied into the cylinder. The intake air from the first secondary intake passage 29 and the intake air from the second intake passage 30 have the same flow velocity and rate and flow into the cylinder, because both passages 29 and 30 have the same cross-sectional area and have a length not significantly different from each other.

In this circumstance, the intake air is supplied as two intake air streams into the cylinder. Those intake air streams collide each other and combine to form one intake air stream, which is successively drawn downward by a piston lowering in the intake stroke, to thereby create a tumble within the cylinder.

Accordingly, it is possible to create the tumble within the cylinder in the state with the amount of the intake air being increased, in comparison with the state of the low engine speed and load by opening the intake control valve 22 to a degree of opening at which the valve body 31 moves beyond the upstream opening 30a of the second secondary intake air passage 30. The tumble therefore facilitates to atomize the fuel and mix of the fuel with the air, which realizes lean bum during an engine operation in its middle speed and load.

When the engine is operated in its high speed and load, the intake control valve 22 is opened to its fully opening position shown by a two-dot-chain line B in FIG. 1. When the intake control valve 22 is fully opened, plenty amount of intake air of a large flow rate flows through the primary intake passage 26 to increase the amount of the intake air for the cylinder. In other words, fully opening the intake control valve 22 when the engine is operated in the high speed and road range allows the engine to generate a high output in response to the engine load.

### (Second Embodiment)

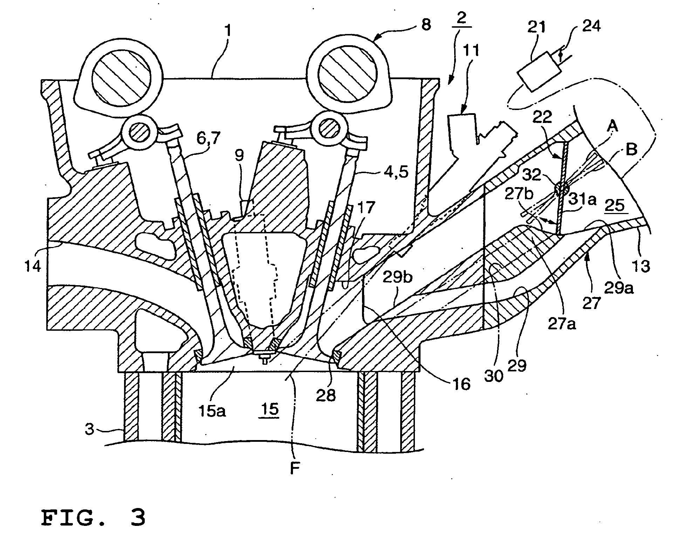

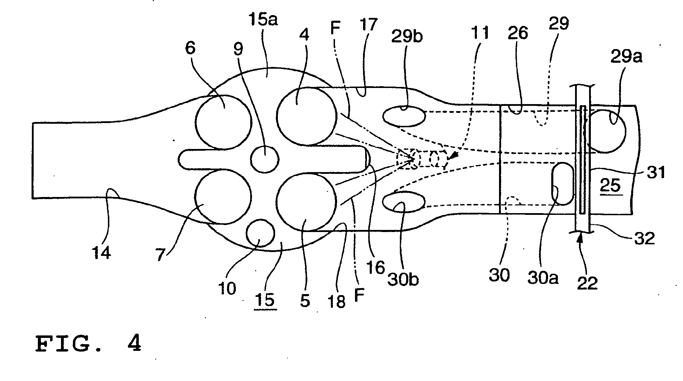

The first and the second secondary intake passages can be formed, as shown in FIG. 3 and FIG. 4.

FIG. 3 is a cross sectional view, showing a second embodiment and FIG. 4 shows a configuration of the intake system 2 of the second embodiment. In those drawings, the same members or the equivalents as described in FIG. 1 and FIG. 2 are given the same reference numerals or symbols and the detailed descriptions thereof are not repeated.

An intake system 2 shown in FIG. 3 employs the same configuration as in the intake system 2 shown in FIG. 1 and FIG. 2, with exception of differences in the position of each downstream end opening of a first and a second secondary intake passages 29 and 30 and the structure of an injector 11.

Respective downstream end openings 29b and 30b of the first and the second secondary intake passages 29 and 30 are formed upstream, in the vicinity of a partition wall 16 for partitioning to divide the downstream end portion of the intake port 12 into two branched passages 17 and 18. Further, the injector 11 used in this embodiment is a typical one to spray the fuel into the intake passage and is disposed, as shown in FIG. 4, between the downstream end openings 29b and 30b of the first and the second secondary intake passages 29 and 30, as seen from the axial line of the cylinder, and across an primary intake passage 26 from those openings (upper side in FIG. 3).

In the intake system 2 of the second embodiment, the intake air drawn into the main intake passage 26 from the downstream end openings 29b and 30b of the first and the second secondary intake passages 29 and 30 mostly flows in one branched passage closer to each of the secondary intake passages 29 and 30, while partially flows in the other branched passage. Therefore, although the intake air flows in only the first secondary intake passage 29 when the engine is operated in its low speed and load range, the intake air can be also flown into the second branched passage 18 that is located relatively remote from the first secondary intake passage 29. Because the second branched passage 18 is supplied with not only the fuel from the injector 11 but also the intake air, the whole amount of the fuel injected can be securely atomized to mix with air.

Thus, while a configuration in which the fuel is sprayed into the intake passage 25 by the injector 11, lean bum can be achieved when the engine is operated in its low speed and load range.

The injector 11 for spraying the fuel into the intake passage 25 is less expensive than the injector 11 for directly spraying fuel into the combustion chamber 15. Therefore, by employing the configuration according to this embodiment, it is possible to obtain an intake system capable of securely performing lean bum, along with cost reduction.

The embodiments described above are teaching (amongst others) an intake system for an engine, including an intake passage having a plurality of branched passages formed therein each for an intake valve, and an intake control valve for varying the intake air flow for the branched passages, in which in the intake control valve is constituted as a butterfly valve and adapted to control the opening of the intake passage; the intake passage comprises a primary intake passage provided with the intake control valve and having the branched passages at its downstream end, and a first and a second secondary intake passages for each of the intake valves, each extending to the vicinity of a corresponding valve seat of the intake valve from an intake control valve mounting section of the primary intake passage; a curved portion having a profile following to the movement excursion of a valve body of the intake control valve is formed downstream of the intake control valve in a passage wall of the intake control valve mounting section and in the vicinity of a valve body which is movable toward the downstream of the intake passage when the intake control valve is operated to open; the upstream end of the first secondary intake passage is open into the intake passage, upstream of the valve body when it is in its fully closing position; and the upstream end of the second secondary intake passage is open into the intake passage, in the curved portion and downstream of the valve body when it is in its fully closing position.

### In particular, in the above-described configuration, the following effects are achieved:

According to the present configuration, when the intake control valve is in its fully closing position, the intake air flows in only the first secondary intake passage. Since first secondary intake passage extends to the vicinity of the valve seat of the intake valve from its opening, just about the whole amount of the intake air flowing in the first secondary intake passage is led near the valve seat and then drawn into the combustion chamber. When an engine load is small, the intake control valve is brought in its fully closing position to allow the just about the whole amount of the intake air to be supplied, via one branched passage, into the cylinder, which securely creates strong swirls in the cylinder.

It is therefore possible to promote fuel atomization and mixture with air to obtain a stable combustion during a low engine load operation even though the fuel supply is small. As a result, using this intake system realizes lean burn even if the engine is operated in a range of its low engine speed and load.

With the intake control valve being opened from its fully closing position, the upstream end opening of the second secondary intake passage is positioned upstream, relative to the valve body of the intake control valve, to allow the intake air to flow through the second secondary intake passage, too. Because the second secondary intake passage extends to the vicinity of a valve seat of an intake valve different from the one described above, the intake air to pass through this second secondary passage will be supplied into the cylinder with scarcely mixing with the intake air flowing in the first secondary passage. In this state, the intake air is supplied as two intake air streams independently from both the branched passages for each intake valve. These streams collide each other to form a single flow, which is in turn drawn down as the piston lowers, and raised as the piston moves upward.

Thus, when the engine is operated in the range of middle speed and load, the valve body of the intake control valve is opened to a degree of opening beyond the upstream opening of the second secondary intake passage. Therefore, within the cylinder there can be created a tumble under an amount of air larger than that under the engine operating condition of low speed and load. Since this tumble promotes fuel atomization and mixture with air, lean burn can be realized even though the engine is operated in its middle speed and load.

On the other hand, when the intake control valve is brought in its fully opening position, a large flow rate of intake air flows in the primary intake passage and the intake air flow of the cylinder increases. That is, when the engine load is high, the intake control valve is brought in its fully opening position, causing the engine to generate a high output corresponding to the load.

The afore-discussed configuration might be further improved by an intake system in which the respective downstream ends of the first and the second secondary intake passages have an opening, at the downstream end portion of the branched passages of the primary intake passage so that each opening faces, along a ceiling wall of a related combustion chamber, the opposing side of the related combustion chamber; an injector for directly spraying fuel into the combustion chamber is disposed between both openings, as seen in the axial direction of the cylinder.

### The effects of this further improved configuration are explained in the following:

When the intake valve is opened, the intake air can be supplied directly to the space between the intake valve and the ceiling wall of the combustion chamber from the first and the second secondary passage. Therefore, the flow velocity of the intake air flowing into the cylinder can further increase to create the swirl and tumble more securely and in a state such that the kinetic energy of the intake air is large. The fuel directly introduced in the cylinder can be promoted furthermore to be atomized and mixed with air. As a result, in realization of lean bum during an engine operation of its low or middle load, the fuel supply can be reduced for a further improvement of fuel consumption.

The afore-described configuration might be still further improved by an intake system in which the respective downstream ends of the first and the second secondary intake passages have an opening, in the vicinity of the upstream side of a branch section of the branched passages; an injector for spraying fuel into the primary intake passage is disposed between both openings, as seen in the axial direction of the cylinder, and across the primary intake passage from both openings.

### The effects of this still further improved configuration are explained in the following:

Most of the intake air flowing out of the respective downstream end openings of the first and second secondary intake passages and into the primary intake passage flows in the branched passage closer to the respective secondary intake passages, while a partial intake air flows in the other branched passage. Accordingly, even if the intake air flows through only the first secondary intake passage, the branched passage that is located relatively remote from the first secondary intake passage could be supplied with not only the fuel from an injector of the intake passage injection type but also the intake air, which enables to securely atomize and mix with air the whole amount of the sprayed fuel.

With the above, as has been described, it is possible to realize lean bum during the engine operation of a low speed and low load, while employing a configuration of fuel injection into the intake passage with an injector. In particular, the employment of the injector for spraying fuel into the intake passage which is less expensive than an injector for spraying fuel directly into the combustion chamber can provide an intake system to perform lean bum securely as well as cost reduction.

Briefly summarizing the above, in order to generate swirls and tumbles securely in order to realize lean burn, and to reduce intake air resistance in order to obtain high output, there is provided, as a most preferred embodiment, a structure in which an intake control valve 22 is structured as a butterfly valve for controlling the opening area of an intake passage 25. An intake passage 25 is composed of: a primary intake passage 26 provided with the intake control valve 22 and branched passages 17 and 18 for intake valves 4 and 5, respectively, at its downstream end; and a first and a second secondary intake passages 29 and 30 for the intake valves, both extending to the vicinity of a valve seat 28 of the respective intake valves 4 and 5 from an intake control valve mounting section 27 of the primary intake passage 26.

A curved portion 27b having a profile following to the movement excursion of a valve body 31 of the intake control valve 22 is formed downstream of the intake control valve 22 in a bottom wall 27a of the intake control valve mounting section 27 and in the vicinity of a valve body 31 which is movable toward the downstream of the intake passage 25 when the intake control valve 22 is operated to open. The upstream end of the first secondary intake passage 29 is open into the intake passage 25, upstream of the valve body 31 when it is in its fully closing position; and the upstream end of the second secondary intake passage 30 is open into the intake passage 25, in the curved portion 27b and downstream of the valve body 31 when it is in its fully closing position.

## Claims

1. Engine having an intake passage (25), comprising a primary intake passage (26) being branched into branched passages (17,18) at its downstream end for each intake valve (4,5), and being provided with an intake control valve (22) adapted to control an opening of the primary intake passage (26), and secondary intake passages (29,30) provided for each of the intake valves (4,5), each of said secondary intake passages (29,30) extending to one of the branched passages (17,18) from a vicinity of a mounting section (27) of the intake control valve (22), **characterized in that** the upstream end (29a) of a first secondary intake passage (29) is open into the intake passage (25), upstream of the valve body (31) when it is in its fully closing position and **in that** the upstream end (30a) of a second secondary intake passage (30) is open into the intake passage (25), in the curved portion (27b) and downstream of the valve body (31) when it is in its fully closing position.

2. Engine according to claim 1, **characterized in that** the intake control valve (22) is constituted as a butterfly valve adapted to control the opening of the intake passage (25).

3. Engine according to claim 1 or 2, **characterized by** a curved portion (27b) having a profile following to a movement excursion of the valve body (31) of the intake control valve (22), wherein the curved portion (27b) is formed downstream of the intake control valve (22) in a bottom wall (27a) of the intake control valve mounting section (27) and in a vicinity of the valve body (31), which is movable toward the downstream of the intake passage (25) when the intake control valve (22) is operated to open.

4. Engine according to one of the claims 1 to 3, **characterized in that** the secondary intake passages (29,30) provided for each of the intake valves are extending to a vicinity of a valve seat (28) of the intake valves (4,5), respectively.

5. Engine according to claim 4, **characterized in that** the downstream ends (29b,30b) of the secondary intake passages (29,30) have an opening, at the downstream end portion of the branched passages (17,18) so that each opening faces, along a ceiling wall (15a) of a related combustion chamber (15), the opposing side of the related combustion chamber, wherein an injector (11) for directly spraying fuel into the combustion chamber is disposed between both openings, as seen in an axial direction of a cylinder.

6. Engine according to claim 4 or 5, **characterized by** an intake passage (25) includes the primary intake passage (26) provided with the intake control valve (22) and first and the second branched passages (17,18), and includes a first and a second secondary intake passages (29,30) for the respective intake valves (4,5), which extend from the section (27) in the primary intake passage (26) where the intake control valve (22) is mounted, to a vicinity of valve seats (28) of the intake valves (4,5), respectively.

7. Engine according to one of the claims 1 to 3, **characterized in that** the secondary intake passages (29,30) provided for each of the intake valves are extending to a vicinity of a partition section (16) dividing a downstream end portion of the intake port (12) into the branched passages (17,18).

8. Engine according to claim 7, **characterized in that** the downstream ends (29b,30b) of the secondary intake passages (29,30) have an opening, in the vicinity of the upstream side of a branch section of the branched passages (17,18), wherein an injector (11) for spraying fuel into the primary intake passage (26) is disposed between both openings, as seen in an axial direction of a cylinder, and across the primary intake passage (26) from both openings.

9. Engine according to claim 7 or 8, **characterized by** an intake passage (25) includes the primary intake passage (26) provided with the intake control valve (22) and first and the second branched passages (17,18), and includes first and a second secondary intake passages (29,30) for the respective intake valves (4,5), which extend from the section (27) in the primary intake passage (26) where the intake control valve (22) is mounted, to a vicinity of a partition wall (16) for partitioning to divide a downstream end portion of an intake port (12) into two branched passages (17,18).

## Patentansprüche

1. Brennkraftmaschine mit einem Einlasskanal (25), aufweisend einen Primär- Einlasskanal (26), der in verzeigte Kanäle (17, 18) an seinem stromabwärtigen Ende für jedes Einlassventil (4, 5) verzweigt ist und der mit einem Einlasssteuerungsventil (22) versehen ist, vorgesehen, um eine Öffnung des Primär- Einlasskanals (26) zu steuern, und Sekundär- Einlasskanäle (29, 30), vorgesehen für jedes der Einlassventile (4, 5), wobei sich jeder der Sekundär- Einlasskanäle (29, 30) zu einem der verzeigten Kanäle (17, 18) von einer Nähe des Montageabschnittes (27) des Einlasssteuerungsventils (22) erstreckt,
**dadurch gekennzeichnet, dass** das stromaufwärtige Ende (29a) des ersten Sekundär- Einlasskanals (29) in den Einlasskanal (25) stromauf des Ventilkörpers (31) offen ist, wenn er in seiner vollständigen Schließposition ist, und dass das stromaufwärtige Ende (30a) des zweiten Sekundär- Einlasskanals (30) in den Einlasskanal (25) offen ist in den gekrümmten Abschnitt (27b) und stromab des Ventilkörpers (31), wenn er in seiner vollständigen Schließposition ist.

2. Brennkraftmaschine nach Anspruch 1, **dadurch gekennzeichnet, dass** das Einlasssteuerungsventil (22) als eine Drosselklappe gebildet ist, vorgesehen, das Öffnen des Einlasskanales (25) zu steuern.

3. Brennkraftmaschine nach Anspruch 1 oder 2, **gekennzeichnet durch** einen gekrümmten Abschnitt (27b) mit einem Profil, das einer Bewegungsspur des Ventilkörpers des Einlasssteuerungsventils (22) folgt, wobei der gekrümmte Abschnitt (27b) stromab des Einlasssteuerungsventils (22) in einer Bodenwand (27a) des Einlasssteuerungsventil- Montageabschnittes (27) und in einer Nähe des Ventilkörpers (31) gebildet ist, der in Richtung stromab des Einlasskanals (259 bewegbar ist, wenn das Einlasssteuerungsventil (22) betätigt wird, um zu öffnen.

4. Brennkraftmaschine nach einem der Ansprüche 1 bis 3, **dadurch gekennzeichnet, dass** die Sekundär- Einlasskanäle (29, 30), vorgesehen für jedes der Einlassventile, sich jeweils in eine Nähe des Ventilsitzes (28) der Einlassventile (4, 5) erstrecken.

5. Brennkraftmaschine nach Anspruch 4, **dadurch gekennzeichnet, dass** die stromabwärtigen Enden (29b, 30b) der Sekundär- Einlasskanäle (29, 30) an dem stromabwärtigen Endabschnitt der verzweigten Kanäle (17, 18) eine Öffnung haben, so dass sich jede Öffnung entlang einer Deckenwand (15a) einer zugehörigen Brennkammer (15) der gegenüberliegenden Seite der betreffenden Brennkammer zugewandt ist, wobei ein Einspritzer (11) für das direkte Einsprühen von Kraftstoff in die Brennkammer zwischen beiden Öffnungen angeordnet ist, wenn in einer axialen Richtung eines Zylinders gesehen.

6. Brennkraftmaschine nach Anspruch 4 oder 5, **gekennzeichnet durch** einen Einlasskanal (25), der den Primär- Einlasskanal (26) enthält, versehen mit dem Einlasssteuerungsventil (22) und erste und zweite Zweig- Kanäle (17, 18), und einen ersten und einen zweiten Sekundär- Einlasskanal (29, 30) für die jeweiligen Einlassventile (4, 5) enthält, die sich von dem Abschnitt (27) in dem Primär- Einlasskanal (26) erstrecken, wo jeweils das Einlasssteuerventil (22) montiert ist, in eine Nähe des Ventilsitzes (28) der Einlassventile (4, 5).

7. Brennkraftmaschine nach einem der Ansprüche 1 bis 3, **dadurch gekennzeichnet, dass** die Sekundär- Einlassventile (29, 30), vorgesehen für jedes der Einlassventile, sich in eine Nähe eines Trennwandabschnittes (16) erstrecken, der einen stromabwärtigen Endabschnitt der Einlassöffnung (12) in die verzweigten Kanäle (17, 18) teilt.

8. Brennkraftmaschine nach Anspruch 7, **dadurch gekennzeichnet, dass** die stromabwärtigen Enden (29b, 30b) der Sekundär- Einlasskanäle (29, 30) eine Öffnung in der Nähe der stromaufwärtigen Seite eines Verzweigungsabschnittes der verzweigten Kanäle (17, 18) haben, wobei ein Einspritzer (11) zum Einsprühen von Kraftstoff in den Primär- Einlasskanal (26) zwischen beiden Öffnungen, wenn in einer axialen Richtung eines Zylinders gesehen, und über dem Primär- Einlasskanal (26) von beiden Öffnungen angeordnet ist.

9. Brennkraftmaschine nach Anspruch 7 oder 8, **gekennzeichnet durch** einen Einlasskanal (25), der den Primär- Einlasskanal (26) enthält, versehen mit dem Einlasssteuerungsventil (22) und die ersten und zweiten verzweigten Kanäle (17, 18), und die ersten und zweiten Sekundär- Einlasskanäle (29, 30) für die jeweiligen Einlassventile (4, 5) enthält, die sich von dem Abschnitt (27) in den Primär- Einlasskanal (26), wo das Einlasssteuerungsventil (22) montiert ist, in eine Nähe einer Trennwand (16) zum Trennen erstrecken, um einen stromabwärtigen Endabschnitt der Einlassöffnung (12) in zwei verzweigte Kanäle (17, 18) zu teilen.

## Revendications

1. Moteur ayant un passage d'admission (25), comprenant un passage d'admission principal (26) qui se ramifie en passages ramifiés (17, 18) au niveau de son extrémité aval pour chaque soupape d'admission (4, 5) et étant doté d'une soupape de régulation d'admission (22) adaptée pour réguler une ouverture du passage d'admission principal (26) et des passages d'admission secondaire (29, 30) prévus pour chacune des soupapes d'admission (4, 5), chacun desdits passages d'admission secondaire (29, 30) s'étendant vers l'un des passages ramifiés (17, 18) à partir d'une proximité d'une section de montage (27) de la soupape de régulation d'admission (22), **caractérisé en ce que** l'extrémité amont (29a) d'un premier passage d'admission secondaire (29) est ouverte dans le passage d'admission (25), en amont du corps de soupape (31) lorsqu'il est dans sa position complètement fermée, et **en ce que** l'extrémité amont (30a) d'un second passage d'admission secondaire (30) est ouverte dans le passage d'admission (25) dans la partie incurvée (27b) et en aval du corps de soupape (31) lorsqu'il est dans sa position complètement fermée.

2. Moteur selon la revendication 1, **caractérisé en ce que** la soupape de régulation d'admission (22) est constituée par une soupape papillon adaptée pour réguler l'ouverture du passage d'admission (25).

3. Moteur selon la revendication 1 ou 2, **caractérisé par** une partie incurvée (27b) qui a un profil qui suit une excursion de mouvement du corps de soupape (31) de la soupape de régulation d'admission (22), dans lequel la partie incurvée (27b) est formée en aval de la soupape de régulation d'admission (22) dans une paroi inférieure (27a) de la section de montage de soupape de régulation d'admission (27) et dans une proximité du corps de soupape (31), qui est mobile vers la partie aval du passage d'admission (25) lorsque la soupape de régulation d'admission (22) est actionnée pour s'ouvrir.

4. Moteur selon l'une quelconque des revendications 1 à 3, **caractérisé en ce que** les passages d'admission secondaires (29, 30) prévus pour chacune des soupapes d'admission sont étendus jusqu'à une proximité d'un siège de soupape (28) des soupapes d'admission (4, 5), respectivement.

5. Moteur selon la revendication 4, **caractérisé en ce que** les extrémités aval (29b, 30b) des passages d'admission secondaires (29, 30) ont une ouverture, au niveau de la partie d'extrémité aval des passages ramifiés (17, 18) de sorte que chaque ouverture fait face, le long d'une paroi de plafond (15a) d'une chambre de combustion (15) relative, au côté opposé de la chambre de combustion relative, dans lequel un injecteur (11) vaporiser directement du carburant dans la chambre de combustion est disposé entre les deux ouvertures, comme observé dans une direction axiale d'un cylindre.

6. Moteur selon la revendication 4 ou 5, **caractérisé par** un passage d'admission (25) comprenant le passage d'admission principal (26) prévu avec la soupape de régulation d'admission (22) et les premier et second passages ramifiés (17, 18) et comprenant un premier et un second passages d'admission secondaires (29, 30) pour les soupapes d'admission (4, 5) respectives, qui s'étendent à partir de la section (27) dans le passage d'admission principal (26) où la soupape de régulation d'admission (22) est montée, jusqu'à une proximité des sièges de soupape (28) des soupapes d'admission (4, 5), respectivement.

7. Moteur selon l'une quelconque des revendications 1 à 3, **caractérisé en ce que** les passages d'admission secondaires (29, 30) prévus pour chacune des soupapes d'admission s'étendent jusqu'à une proximité d'une section de séparation (16) divisant une partie d'extrémité aval de l'orifice d'admission (12) en passages ramifiés (17, 18).

8. Moteur selon la revendication 7, **caractérisé en ce que** les extrémités aval (29b, 30b) des passages d'admission secondaires (29, 30) ont une ouverture, dans la proximité du côté amont d'une section de ramification des passages ramifiés (17, 18), dans lequel un injecteur (11) pour vaporiser le carburant dans le passage d'admission principal (26) est disposé entre les deux ouvertures, comme observé dans une direction axiale d'un cylindre, et à travers le passage d'admission principal (26) à partir des deux ouvertures.

9. Moteur selon la revendication 7 ou 8, **caractérisé par** un passage d'admission (25) qui comprend le passage d'admission principal (26) doté de la soupape de régulation d'admission (22) et des premier et second passages ramifiés (17, 18) et comprend des premier et second passages d'admission secondaire (29, 30) pour les soupapes d'admission (4, 5) respectives, qui s'étendent à partir de la section (27) dans le passage d'admission principal (26) où la soupape de régulation d'admission (22) est montée, jusqu'à une proximité d'une paroi de séparation (16) afin de diviser une partie d'extrémité aval d'un orifice d'admission (12) en deux passages ramifiés (17, 18).
